# FASCICULE DE BREVET EUROPEEN

(11) **EP 4 235 085 B1**
(45) Date de publication et mention de la délivrance du brevet: **02.04.2025**
(21) Numéro de dépôt: 22158756.1
(22) Date de dépôt: 25.02.2022
(51) Int. Cl.: F41G 5/06, F41G 3/16, F41G 5/14, H04L 12/40

(54) **TÉLÉOPÉRATION SÉCURISÉE D'UN SYSTÈME D'ARME**
GESICHERTE FERNBETÄTIGUNG EINES WAFFENSYSTEMS
SECURE REMOTE OPERATION UNIT FOR A WEAPON SYSTEM

(43) Date de publication de la demande: 30.08.2023
(73) Titulaire: John Cockerill Defense S.A., 4431 Ans (BE)
(72) Inventeur: PISANE, Jonathan, 5380 Fernelmont (BE); AUBRY, Yohann, 4340 Awans (BE)
(74) Mandataire: AWA Benelux

(56) Documents cités:
- WO-A1-01/65197
- WO-A1-2013/127397
- FR-A1- 2 879 730
- GB-A- 2 530 612

## Description

### Objet de l'invention

La présente invention ressort du domaine technologique des télécommunications sécurisées qui permettent de contrôler les fonctions d'un ou plusieurs systèmes d'arme, comme par exemple des tourelles de char non habitées, dont l'architecture électronique inclut un bus de données par exemple un bus CAN, Ethernet ou autre.

### Arrière-plan technologique et état de la technique

Aujourd'hui les commandes d'une tourelle de char conventionnelle, donc habitée, sont généralement introduites par deux opérateurs, le commandant et l'artilleur. Cependant, le marché demande de plus en plus de proposer des tourelles sans occupant, la mise en danger des opérateurs lors des missions devenant de moins en moins acceptable sur le plan sociétal.

La présente invention se positionne dans le cadre de l'ajout d'un système de communications sans fil pour la transmission des vidéos et des commandes et mesures de tourelle.

Lors du passage des liaisons filaires au liaisons dans le domaine radio, de nombreuses contraintes s'ajoutent pour la prise en compte de la sécurisation des liaisons, comme par exemple l'utilisation de la bande passante, le temps de latence, les fréquences disponibles pour la communication, etc. permettant d'obtenir la qualité de service désirée. La qualité de service (QoS, *Quality of service*) désigne toute technologie capable de gérer la transmission des données, tout en réduisant la perte de paquets, la latence et la gigue (*jitter*) sur le réseau. Ce concept a pour but de contrôler et de gérer les ressources réseau, en hiérarchisant certains types de données du réseau.

De plus, le contexte implique la téléopération de systèmes d'arme dans des environnements complexes et bruités, nécessitant une utilisation de bande passante et de fréquence ad hoc en fonction de la réalité du terrain, et ce de manière à garantir la qualité de service, c'est-à-dire en prenant en compte notamment le temps de latence, et de manière la plus sécurisée possible, via un mécanisme de connexion approprié entre un poste de commande et un ou plusieurs systèmes d'arme.

Actuellement, le besoin précité est utilisé notamment dans le domaine des drones essentiellement à des fins de loisirs, mais la technique mise en œuvre se borne généralement à un pilotage de type modélisme sans utilisation d'un système électronique complexe comme celui impliquant un bus multiplexé, appelé bus de terrain (par opposition à un bus pour la communication informatique de bureau) comme par exemple le bus CAN ou MiICAN, un système basé sur Ethernet ou autre. Pour rappel, un bus de terrain établit la connexion entre les capteurs, les actionneurs et l'ordinateur de contrôle (ou *PLC,* contrôleur logique programmable). Plusieurs dispositifs peuvent être connectes a un bus de terrain et envoyer leurs messages via la même ligne (topologie linéaire).

On trouve également des solutions dans le domaine des véhicules autonomes qui, en fonction des systèmes de contrôle et/ou des algorithmes utilisés, sont capables de générer une ou plusieurs instructions de commande ponctuelles de façon autonome (de type robots).

Dans le domaine des tourelles de véhicule blindé, on peut trouver de nombreuses tourelles de démonstration mais elles sont généralement téléopérées par câble et non par radio.

Peu d'informations à ce sujet circulent publiquement et les tourelles inhabitées proposées actuellement sur le marché sont ainsi en grande majorité toujours opérées par liaison filaire. En particulier, on ne trouve pas de validation des commandes.

Par exemple, le document EP 0 419 897 A2 divulgue un système de commande à distance pour un véhicule de combat comprenant un appareil de commande à distance pour fournir des signaux au véhicule afin de commander une pluralité de fonctions de véhicule commandées de manière conventionnelle par le personnel à bord du véhicule ; un appareil monté sur véhicule actionnable de manière sélective pour recevoir les signaux provenant de l'appareil de télécommande et pour actionner la pluralité de fonctions du véhicule conformément aux signaux ; et un appareil pour désactiver de manière sélective l'appareil monté sur véhicule afin de permettre une commande non à distance des fonctions du véhicule.

Dans US 2012/281829 A1, l'invention concerne un système de tir numérique à distance pour tirer sélectivement une pluralité de charges utiles de mission à distance. Le système de tir numérique à distance comprend un premier ensemble de circuits de tir couplés en communication et fonctionnant pour tirer un premier ensemble correspondant de charges utiles de mission à distance et un second ensemble de circuits de tir couplés en communication et fonctionnant pour tirer un second ensemble correspondant de charges utiles de mission à distance. Le système de mise à feu numérique à distance comprend un panneau de commande de mise à feu relié de manière communicative aux circuits de mise à feu des premier et second ensembles, une première prise de code numérique configurée pour être intégrée en combinaison de communication avec chaque circuit de mise à feu du premier ensemble et le panneau de commande de mise à feu, une seconde prise de code numérique configurée pour être intégrée en combinaison de communication avec chaque circuit de mise à feu du second ensemble et le panneau de commande de tir, et un commutateur de sélection de charge utile pour sélectionner une charge utile de mission à distance.

Le document EP 1 1947 413 B2 divulgue un procédé de commande à distance d'un système d'arme de véhicule de combat avec un ordinateur de système d'arme, qui agit sur des dispositifs de visée du système d'arme, dans lequel sont raccordés une unité d'affichage de système d'arme pour afficher des contenus d'écran et une unité d'entrée de système d'arme, qui sont disposés à l'intérieur du véhicule de combat pour commander le système d'arme dans un mode non télécommandé, moyennant quoi une liaison de données est établie entre un ordinateur de télécommande, auquel sont raccordés une unité d'affichage de télécommande et une unité d'entrée de télécommande, et l'ordinateur de système d'arme, caractérisé en ce que, dans un mode télécommandé servant à commander à distance l'ordinateur de système d'arme par l'ordinateur de télécommande, les contenus d'écran affichés dans le mode non télécommandé sur l'unité d'affichage de système d'arme sont représentés au moins partiellement sur l'unité d'affichage de télécommande et en ce que des actions d'entrée, qui sont exécutées par l'unité d'entrée de télécommande, agissent comme des actions d'entrée de l'unité d'entrée du système d'arme et de manière telle que le système d'arme est commutable par l'ordinateur de télécommande dans un état de sécurité, dans lequel un mouvement du système d'arme est empêché.

Le document WO 01/65197 A1 divulgue un dispositif modulaire comprenant essentiellement un poste de commandement mobile, des bases au sol et des armes télé-opérées. Les bases au sol sont réparties sur une zone à protéger et sont chargées de détecter, localiser et surveiller les intrusions dans ladite zone. Les armes télé-opérées sont disposées à portée de tir de cette zone et fonctionnent soit automatiquement à partir des données recueillies par les bases terrestres, soit par intervention humaine, depuis le poste de commandement.

Le problème à résoudre est de donner à une tourelle existante et opérationnelle la possibilité d'être opérée indifféremment soit par le personnel embarqué, soit, dans des situations particulières ou dangereuses, par une manipulation à distance.

Le principal enjeu est de diminuer l'exposition des soldats sur les théâtres d'opérations en leur permettant de piloter des tourelles de blindés à distance de manière fluide, sécurisée et fiable.

### Buts de l'invention

La présente invention vise à pouvoir transformer les systèmes d'arme d'une flotte existante, et actuellement opérés dans un mode d'utilisation conventionnel, habité et non téléopéré, en un mode d'utilisation téléopéré, comme par exemple la transformation d'une tourelle avec personnel embarqué (commandant et artilleur) en une tourelle inhabitée et téléopérée à partir d'un poste de commande déporté.

En particulier, l'invention vise à mettre en œuvre via une communication non filaire, par exemple une communication radio, la sécurisation et la fluidité des communications entre deux ou plusieurs entités non physiquement connectées.

En particulier encore, l'invention vise à proposer une gestion sécurisée et efficiente du point de vue de la notion de qualité de service des communications dans un système hybride constitué de deux bus de données de terrain connectés par une liaison radio, les communications des bus et radio ayant des contraintes très différentes.

Un autre but de l'invention est de permettre au personnel du poste de contrôle à distance d'avoir accès aux dispositifs, contrôles, capteurs et commandes d'un système d'arme tel qu'une tourelle exactement comme s'il se trouvait à l'intérieur de la tourelle. Cependant, dès que la tourelle ne doit plus être contrôlée et opérée à distance, le client émetteur-récepteur additionnel doit pouvoir être déconnecté de l'interface et la tourelle revenir à son état initial pour être opérée par le personnel embarqué (commandant et artilleur typiquement).

### Principaux éléments caractéristiques de l'invention

Un premier aspect de la présente invention se rapporte à un système pour assurer la sécurisation des communications bidirectionnelles utilisant un réseau sans fil de type radiofréquence, entre N systèmes d'arme aptes à être téléopérés, N≥1, et un poste de commande, comprenant :
- un poste de commande à distance destiné à accueillir au moins un opérateur, avec un premier bus de données de terrain auquel sont connectés un premier contrôleur avec au moins comme client un premier système émetteur-récepteur ;
- N systèmes d'arme conventionnels avec chacun un second bus de données de terrain, et au moins un client ,

ledit système comprenant un client supplémentaire muni d'un second système émetteur-récepteur, apte à être connecté à chacun des N systèmes d'arme, à demeure ou de manière amovible, pour utilisation en mode de téléopération ; le premier contrôleur avec son premier émetteur-recepteur étant alors apte à recevoir des données du et/ou à envoyer des commandes vers le client via le réseau radio et le client supplémentaire avec son second émetteur-récepteur étant apte à envoyer des données du et/ou à recevoir des commandes destinées au client via le réseau radio ;
le premier émetteur-récepteur et le second émetteur-récepteur étant mis en œuvre de manière logicielle, définissant un fonctionnement en radio logicielle ou SDR et sont configurés pour échanger des messages de manière à garantir la qualité de service demandée et en particulier un temps de latence prédéterminé ; caractérisé en ce que ledit système est configuré pour, en cas de dépassement dudit temps de latence prédéterminé, entrer en mode SDR dégradé et permettre que les deux bus de données de terrain et leurs clients respectifs puissent être opérés de manière fluide en dépit des perturbations de la liaison radio ; de la manière suivante :
   - un émetteur qui envoie un message vers un récepteur reçoive du récepteur un premier acquittement qui permet l'effacement du message à l'émetteur ;
   - en cas de non-réception du premier acquittement, le message soit renvoyé un certain nombre de fois dans un délai imparti fixé par le temps de latence prédéterminé ;
   - passé ce délai imparti, l'émetteur entre en mode dégradé et/ou continue d'essayer de faire passer le message et envoie un second acquittement au bus de travail dont il est client pour que les autres clients de ce bus de travail puissent opérer sans perturbation et de manière transparente.

Selon des modes d'exécution préférés, le système pour assurer la sécurisation des communications bidirectionnelles comprend en outre au moins une des caractéristiques suivantes ou une combinaison appropriée de plusieurs d'entre elles :
- les N systèmes d'arme sont des tourelles de véhicule blindé et les clients sont des capteurs ou des actionneurs ;
- le client supplémentaire est un second contrôleur ou ordinateur muni du second système émetteur-récepteur pour la connexion de manière amovible à au moins un des N systèmes d'arme dans une configuration conventionnelle ;
- le premier bus de terrain, respectivement le second bus de terrain, est un bus de terrain industriel tel que CAN, MilCAN ou Ethernet ;
- les bus de terrain peuvent être remplacés par des systèmes de communication fonctionnant selon d'autres architectures, comme une architecture en étoile par exemple ;
- l'accessibilité à l'opérateur des dispositifs, contrôleurs, capteurs et commandes d'actionneurs respectifs du système d'arme est transparente et identique à une configuration conventionnelle où le système d'arme est habité ;
- le système est configuré pour accepter des commandes envoyées avec une très faible latence ;
- le système est apte à gérer des communications multiples avec les systèmes d'arme ;
- le système comprend des moyens de recherche de fréquences non occupées pour éviter les brouillages et liaisons radios adverses.

Un second aspect de la présente invention concerne l'utilisation d'un système d'arme tel qu'une tourelle de véhicule blindé, successivement selon l'un des deux modes suivants et vice versa :
- un mode de téléopération non habité au moyen du système de sécurisation des communications bidirectionnelles par radio entre le poste de commande et le système d'arme téléopéré, tel que décrit ci-dessus ;
- un mode de fonctionnement ordinaire ou conventionnel, sous forme habité, où le second contrôleur ou ordinateur muni d'un second système émetteur-récepteur a été déconnecté du système d'arme.

### Brève description des figures

La figure 1 représente schématiquement un système de communications sans fil sécurisées entre un poste de commande et une ou plusieurs tourelles téléopérées selon la présente invention.
La figure 2 représente schématiquement la séparation des canaux respectivement dédiés au stream vidéo et au transit des commandes et des données dans le système selon l'invention.
La figure 3 représente schématiquement les moyens de contrôle des communications utilisant un bus de travail et une transmission radio, selon l'invention.
La figure 4 représente la structure de traitement de l'information au moyen d'un bus MilCAN.

### Description détaillée de l'invention

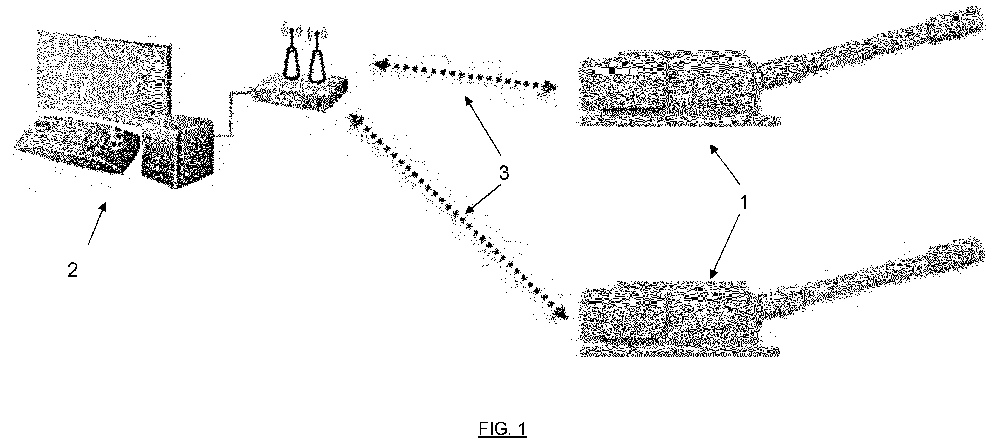

Selon le système de la présente invention représenté sur la FIG. 1, un système d'arme 1, tel qu'une tourelle de véhicule blindé, ou plus généralement N systèmes d'arme, inhabité(s), est (sont) téléopéré(s) à partir d'un (même) poste de commande 2 de manière simultanée et dynamique (c'est-à-dire qu'on peut ajouter et enlever des systèmes d'arme en temps réel). Les communications entre le poste de commande 2 et le (les) système(s) d'arme 1 sont des communications sans fil, de préférence des communications radiofréquences 3.

Pour les besoins de l'invention, on utilisera de préférence un système radio logiciel (SDR pour *software defined radio*)*.* Il est connu qu'il s'agit d'un système de radiocommunication configurable utilisant des techniques de traitement numérique du signal sur des circuits numériques programmables. Sa flexibilité lui permet de s'adapter aux différents protocoles de radiocommunication, et de répondre aux besoins croissants de performance et d'interopérabilité entre systèmes.

Du poste de commandement 2, l'opérateur peut sélectionner la tourelle 1 qu'il veut opérer, le système radio se chargeant de définir les paramètres radio (fréquence, bande passante, etc.) en fonction du QoS défini. De préférence, il reçoit en temps réel un signal vidéo provenant de caméras embarquées dans les différentes tourelles sélectionnées. Il contrôle également toutes les fonctions de la tourelle qu'il choisit d'opérer.

Le système radio permet normalement de transporter la vidéo et les données de pilotage en full duplex, soit dans les deux sens de communication sur la radio et le système électronique, via un bus de terrain tel qu'un bus CAN (pour *Controller Area Network*)*,* Ethernet ou encore selon une autre architecture connue de l'homme de métier.

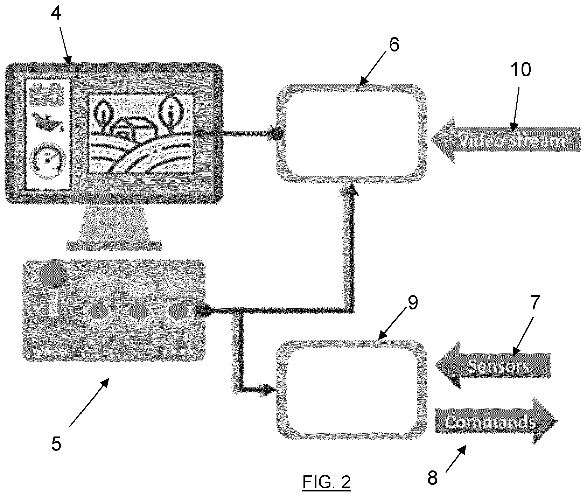

Avantageusement, la vidéo et les données sont transmises sur N canaux différents, N>1 (voir FIG. 2). Le nombre de canaux peut être configurable de manière logicielle. On utilisera des algorithmes de recherche de fréquences libres pour éviter les brouillages (*jammings*) et autres liaisons radios adverses afin d'avoir un fonctionnement optimal. Le poste de commande comporte au moins une interface d'acquisition 4 (écran) et une interface de commande 5 (clavier, manette, bouton, joystick, etc.), sur laquelle l'opérateur peut opérer la sélection 6 d'un stream vidéo 10 provenant d'une des tourelles 1. Par l'interface de commande 5, l'opérateur peut également commander un contrôleur 9 qui envoie une commande 8 à une tourelle 1, en fonction des données reçues du ou des capteurs 7.

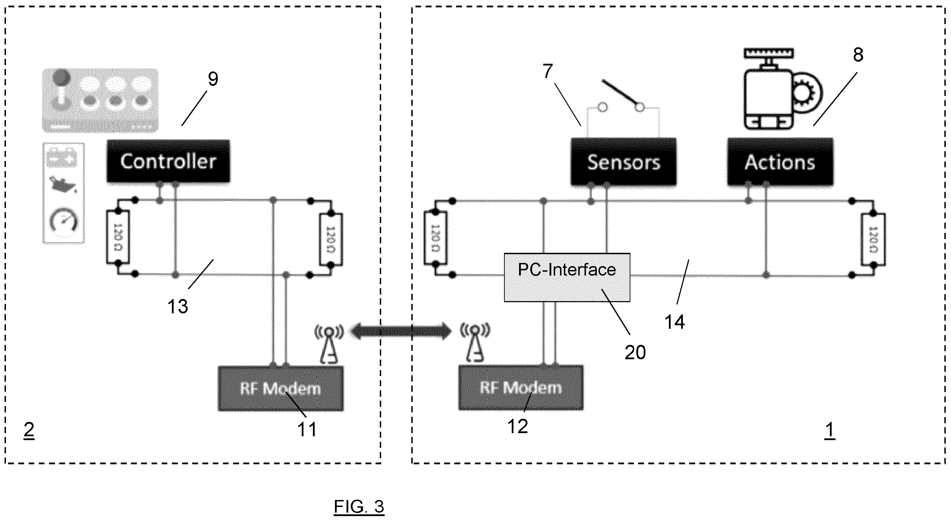

Le canal de transmission des données, primordial dans le fonctionnement, doit avoir le moins possible d'erreurs et de latence et ce en full duplex. De préférence, on utilisera pour la transmission les moyens déjà présents et internes au système d'arme, par exemple le bus CAN, MilCAN ou autre (voir FIG. 3).

Sur le bus électronique de terrain, par ex. le bus CAN, Ethernet ou autre, transitent et sont reçus toutes les émissions de commandes de l'émetteur et les messages de réception ou de confirmation des récepteurs. Les récepteurs peuvent êtres des actionneurs ou autres éléments pilotables électriquement, par action humaine ou par automatisation.

La FIG. 3 montre une vue schématique du contrôle avec le bus de données et la radio, selon l'invention. Le circuit électronique du poste de commande 2 comporte un premier bus 13 (tel que décrit plus haut, par exemple un bus CAN) sur lequel sont connectés, d'une manière connue de l'homme de métier, le contrôleur 9 et un premier émetteur-récepteur (modem RF) 11. Le circuit électronique de la tourelle téléopérée 1 comporte un second bus 14 (tel que décrit plus haut, par ex. un bus CAN) sur lequel sont connectés, d'une manière connue de l'homme de métier, des « clients », comme par exemple un capteur 7 ou un actionneur 8 de même qu'un client supplémentaire sur le bus du système d'arme qui est un second émetteur-récepteur (modem RF) 12, permettant de connecter à distance le poste de commande 2 au système d'arme 1 en mode téléopéré. Dans les faits, le bus CAN est dédoublé mais il peut être vu virtuellement dans le système comme un seul bus. Sur un tel bus, si un émetteur (client 1) envoie par exemple une trame avec une commande (ou des data) à un récepteur (client 2), dès réception de la commande par le récepteur, celui-ci va envoyer en retour à l'émetteur une trame avec un message de validation et bonne réception de la commande (appelé acquittement, cette notion étant bien connue de l'homme de métier des systèmes de communication).

Toutes les informations transitent par le bus CAN, que ce soit des informations de contrôle (en bidirectionnel) ou des informations de type flux vidéo (en monodirectionnel).

Une difficulté du contrôle des communications apparaît lorsque, par exemple, il y a une perte et/ou latence excessive du signal radio entre émetteurs et récepteurs. Ainsi, du côté poste de commande par exemple, si le contrôleur (client 1) envoie sur le système électronique un signal de commande qui n'est en fait pas reçu, il ne reçoit donc pas l'accusé de réception (ou acquittement) du récepteur (client 2).

Selon l'invention, l'ajout du client « modem RF » sur le bus CAN du système d'arme ne doit modifier (presque) en rien le comportement du bus CAN. Le modem RF se comporte donc comme un client classique sur ce bus et va donc collecter les messages devant être envoyés vers le poste de commande. Le raisonnement s'applique également dans l'autre sens (du poste de commande vers le système d'arme). Ceci permet un fonctionnement classique et normal du bus CAN physique du système d'arme. Le modem RF va ensuite envoyer ces données vers le poste de commande de la manière la plus efficiente possible (utilisation minimale des ressources de manière à garantir le QoS) et demander au modem RF du poste de commande un acquittement. Dès réception de cet acquittement par le modem RF du système d'arme, le message est supprimé de la mémoire de ce modem RF. En cas de non-réception de cet acquittement, le modem RF du système d'arme va renvoyer le message vers le poste de commande un certain nombre de fois. Passé ce délai, déterminé de manière à garantir les temps de latence pour la bonne téléopération du système d'arme, le modem RF du système d'arme rentre dans un mode dégradé au point de vue radio et/ou réessaie de transmettre les données. En cas d'échec, le modem RF signale au bus CAN du système d'arme que le message n'a pas été transmis (par exemple par l'émission d'un « second » acquittement). Les autres clients du bus CAN reçoivent alors cette information et continuent leurs opérations en fonction de cette information.

Pour remédier à la difficulté précitée, qui pourrait être vue comme un défaut du système, il va donc être prévu, selon l'invention, alors que l'acquittement radio se fait attendre, d'envoyer un deuxième acquittement, provisoire celui-là, sur le bus CAN dans l'attente de recevoir l'acquittement définitif. Cela peut se faire par exemple en tenant, au niveau des modems, un inventaire qui reprend la liste des messages envoyés (comme déjà suggéré ci-dessus), les messages étant effacés au fur et à mesure dès que les acquittements définitifs sont reçus. Cette technique va permettre aux bus CAN de fonctionner correctement en tenant compte de leurs contraintes, notamment en respectant les temps de latence autorisés des bus et avec des modems dont le fonctionnement va être transparent pour le système de bus.

Cette méthode peut être avantageusement appliquée lorsqu'il y a une surcharge de messages émetteurs, et/ou lorsqu'il y a un problème d'arbitrage lors d'envois simultanés de messages d'acquittement.

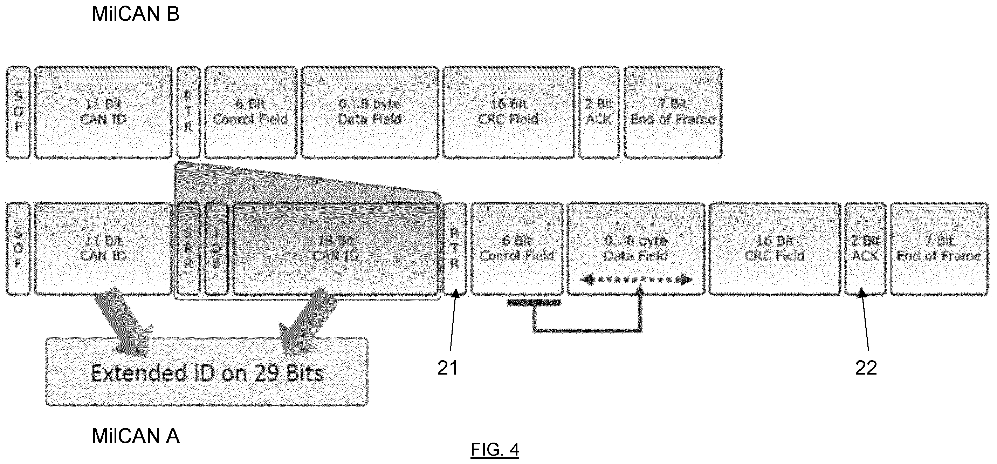

La FIG. 4 donne la schématique du traitement de l'information (trame) au moyen d'un bus MilCAN.

### Liste des symboles de référence

- 1: tourelle de véhicule blindé ou généralement système d'arme
- 2: poste de commande déporté
- 3: liaison sans fil (radio)
- 4: interface d'acquisition
- 5: interface de commande
- 6: sélection de streaming vidéo
- 7: capteur
- 8: commande
- 9: contrôle de commande
- 10: streaming vidéo
- 11: modem du poste de commande
- 12: modem du contrôleur de tourelle amovible
- 13: bus CAN du poste de commande
- 14: bus CAN de la tourelle
- 20: contrôleur amovible additionnel pour tourelle téléopérée
- 21: trame CAN - bit RTR (Remote Transmisison Request) : 0 si data, 1 si requête
- 22: trame CAN - bits ACK (acquittement)

## Revendications

1. Un système pour assurer la sécurisation des communications bidirectionnelles utilisant un réseau sans fil de type radiofréquence, entre N systèmes d'arme (1) aptes à être téléopérés, N≥1, et un poste de commande (2), comprenant :
- un poste de commande à distance (2) destiné à accueillir au moins un opérateur, avec un premier bus de données de terrain (13) auquel sont connectés un premier contrôleur (9) avec au moins comme client un premier système émetteur-récepteur (11) ;
- N systèmes d'arme (1) conventionnels avec chacun un second bus de données de terrain (14), et au moins un client (7, 8) ;
ledit système comprenant un client supplémentaire (20) muni d'un second système émetteur-récepteur (12), apte à être connecté à chacun des N systèmes d'arme (1), à demeure ou de manière amovible, pour utilisation en mode de téléopération ; le premier contrôleur (9) avec son premier émetteur-recepteur (11) étant alors apte à recevoir des données du et/ou à envoyer des commandes vers le client (7, 8) via le réseau radio et le client supplémentaire (20) avec son second émetteur-récepteur (12) étant apte à envoyer des données du et/ou à recevoir des commandes destinées au client (7, 8) via le réseau radio ;
le premier émetteur-récepteur (11) et le second émetteur-récepteur (12) étant mis en œuvre de manière logicielle, définissant un fonctionnement en radio logicielle ou SDR et sont configurés pour échanger des messages de manière à garantir la qualité de service demandée et en particulier un temps de latence prédéterminé ;
**caractérisé en ce que** le système est configuré pour, en cas de dépassement dudit temps de latence prédéterminé, entrer en mode SDR dégradé et permettre que les deux bus de données de terrain (13, 14) et leurs clients respectifs puissent être opérés de manière fluide en dépit des perturbations de la liaison radio ; de la manière suivante :
- un émetteur qui envoie un message vers un récepteur reçoive du récepteur un premier acquittement qui permet l'effacement du message à l'émetteur ;
- en cas de non-réception du premier acquittement, le message soit renvoyé un certain nombre de fois dans un délai imparti fixé par le temps de latence prédéterminé ;
- passé ce délai imparti, l'émetteur entre en mode dégradé et/ou continue d'essayer de faire passer le message et envoie un second acquittement au bus de travail dont il est client pour que les autres clients de ce bus de travail puissent opérer sans perturbation et de manière transparente.

2. Le système selon la revendication 1, **caractérisé en ce que** les N systèmes d'arme sont des tourelles (1) de véhicule blindé et les clients sont des capteurs (7) et des actionneurs (8).

3. Le système selon la revendication 1, **caractérisé en ce que** le client supplémentaire est un second contrôleur ou ordinateur (20) muni du second système émetteur-récepteur (12) pour la connexion de manière amovible à au moins un des N systèmes d'arme dans une configuration conventionnelle.

4. Le système selon la revendication 1, **caractérisé en ce que** le premier bus de terrain (13), respectivement le second bus de terrain (14), est un bus de terrain industriel tel que CAN, MilCAN ou Ethernet.

5. Le système selon la revendication 1, **caractérisé en ce que** les bus de terrain (13, 14) peuvent être remplacés par des systèmes de communication fonctionnant selon d'autres architectures, comme une architecture en étoile par exemple.

6. Le système selon la revendication 1, **caractérisé en ce que** l'accessibilité à l'opérateur des dispositifs, contrôleurs, capteurs et commandes d'actionneurs respectifs du système d'arme (1) est transparente et identique à une configuration conventionnelle où le système d'arme (1) est habité.

7. Le système selon la revendication 1, **caractérisé en ce que** le système est configuré pour accepter des commandes envoyées avec une très faible latence.

8. Le système selon la revendication 1, **caractérisé en ce qu'**il est apte à gérer des communications multiples avec les systèmes d'arme.

9. Le système selon la revendication 1, **caractérisé en ce qu'**il comprend des moyens de recherche de fréquences non occupées pour éviter les brouillages et liaisons radios adverses.

10. Utilisation d'un système d'arme (1) tel qu'une tourelle de véhicule blindé, successivement selon l'un des deux modes suivants et vice versa :
- un mode de téléopération non habité au moyen du système de sécurisation des communications bidirectionnelles par radio entre le poste de commande et le système d'arme téléopéré, selon l'une quelconque des revendications précédentes ;
- un mode de fonctionnement ordinaire ou conventionnel, sous forme habité, où le second contrôleur ou ordinateur (20) muni d'un second système émetteur-récepteur (12) a été déconnecté du système d'arme (1).

## Patentansprüche

1. System zur Gewährleistung der Sicherung der bidirektionalen Kommunikation über ein drahtloses Funkfrequenznetz zwischen N fernbedienbaren Waffensystemen (1), N ≥ 1, und einer Kommandostation (2), umfassend:
- eine entfernte Kommandostation (2), die dazu bestimmt ist, mindestens einen Bediener aufzunehmen, mit einem ersten Felddatenbus (13), mit dem ein erster Controller (9) mit mindestens einem ersten Sende-Empfangs-System (11) als Client verbunden ist;
- N konventionelle Waffensysteme (1) mit jeweils einem zweiten Felddatenbus (14) und mindestens einem Client (7, 8),
wobei das System einen zusätzlichen Clienten (20) umfasst, der mit einem zweiten Sende-Empfangs-System (12) ausgestattet ist, das mit jedem der N Waffensysteme (1) fest oder lösbar verbindbar ist, um im Fernbedienungsmodus verwendet zu werden; wobei der erste Controller (9) mit seinem ersten Sender-Empfänger (11) dann imstande ist, über das Funknetz Daten vom Clienten (7, 8) zu empfangen und/oder Befehle an diesen zu senden, und der zusätzliche Client (20) mit seinem zweiten Sender-Empfänger (12) imstande ist, über das Funknetz Daten vom Client (7, 8) zu senden und/oder Befehle für diesen zu empfangen;
wobei der erste Sender-Empfänger (11) und der zweite Sender-Empfänger (12) softwaremäßig umgesetzt werden, einen Software-Funkbetrieb oder SDR definieren und ausgelegt sind, um Nachrichten derart auszutauschen, dass die geforderte Servicequalität und insbesondere eine vorgegebene Latenzzeit garantiert wird;
**dadurch gekennzeichnet, dass** das System ausgelegt ist, um bei Überschreitung der vorgegebenen Latenzzeit in den SDR-Degraded-Modus zu wechseln und zu ermöglichen, dass die beiden Felddatenbusse (13, 14) und ihre jeweiligen Clients trotz Störungen der Funkverbindung reibungslos betrieben werden können, auf folgende Weise:
- ein Sender, der eine Nachricht an einen Empfänger sendet, empfängt vom Empfänger eine erste Bestätigung, die das Löschen der Nachricht an den Sender ermöglicht;
- bei Nichterhalt der ersten Bestätigung wird die Nachricht innerhalb einer vorgegebenen Zeit, die durch die vorgegebene Latenzzeit festgelegt ist, eine bestimmte Anzahl von Malen erneut gesendet;
- nach Ablauf dieser vorgegebenen Zeit wechselt der Sender in den Degraded-Modus und/oder versucht weiterhin, die Nachricht zu übermitteln und sendet eine zweite Bestätigung an den Arbeitsbus, dessen Client er ist, damit die anderen Clienten dieses Arbeitsbusses störungsfrei und transparent arbeiten können.

2. System nach Anspruch 1, **dadurch gekennzeichnet, dass** die N Waffensysteme Geschütztürme (1) von gepanzerten Fahrzeugen sind und die Clients Sensoren (7) und Aktoren (8) sind.

3. System nach Anspruch 1, **dadurch gekennzeichnet, dass** der zusätzliche Client ein zweiter Controller oder Rechner (20) ist, der mit dem zweiten Sende-Empfangs-System (12) zur lösbaren Verbindung mit mindestens einem der N Waffensysteme in einer konventionellen Konfiguration versehen ist.

4. System nach Anspruch 1, **dadurch gekennzeichnet, dass** der erste Feldbus (13) beziehungsweise der zweite Feldbus (14) ein industrieller Feldbus wie CAN, MilCAN oder Ethernet ist.

5. System nach Anspruch 1, **dadurch gekennzeichnet, dass** die Feldbusse (13, 14) durch Kommunikationssysteme ersetzt werden können, die nach anderen Architekturen arbeiten, wie beispielsweise nach einer Sternarchitektur.

6. System nach Anspruch 1, **dadurch gekennzeichnet, dass** die Zugänglichkeit zu den jeweiligen Vorrichtungen, Controllern, Sensoren und Aktuatorsteuerungen des Waffensystems (1) für den Bediener transparent und identisch mit einer konventionellen Konfiguration ist, bei der das Waffensystem (1) bemannt ist.

7. System nach Anspruch 1, **dadurch gekennzeichnet, dass** das System ausgelegt ist, um Befehle akzeptieren, die mit sehr geringer Latenz gesendet werden.

8. System nach Anspruch 1, **dadurch gekennzeichnet, dass** es imstande ist, Mehrfachkommunikationen mit den Waffensystemen zu verwalten.

9. System nach Anspruch 1, **dadurch gekennzeichnet, dass** es Mittel zur Suche nach freien Frequenzen umfasst, um Störungen und gegnerische Funkverbindungen zu vermeiden.

10. Verwendung eines Waffensystems (1) wie eines Geschützturms eines gepanzerten Fahrzeugs, nacheinander gemäß einem der beiden folgenden Modi und umgekehrt:
- einem unbemannten Fernbedienungsmodus mittels des Systems zur Sicherung der bidirektionalen Funkkommunikation zwischen der Kommandostation und dem fernbedienten Waffensystem nach einem der vorhergehenden Ansprüche;
- einem gewöhnlichen oder konventionellen bemannten Betriebsmodus, bei dem der zweite Controller oder Rechner (20), der mit einem zweiten Sende-Empfangs-System (12) ausgestattet ist, vom Waffensystem (1) getrennt ist.

## Claims

1. A system for securing two-way communications using a radio frequency wireless network between N weapons systems (1) apt to be remotely operated, with N≥1, and a control station (2), comprising:
- a remote-control station (2) for accommodating at least one operator, with a first field data bus (13) to which a first controller (9) is connected with at least a first transceiver system (11) as a client;
- N conventional weapons systems (1) each with a second field data bus (14), and at least one client (7, 8), said system comprising an additional client (20) provided with a second transceiver system (12), apt to be connected to each of the N weapons systems (1), permanently or removably, for operation in remote operation mode; the first controller (9) with the first transceiver (11) thereof then being then apt to receive data from and/or send commands to the client (7, 8) via the radio network and the additional client (20) with the second transceiver (12) being apt to send data from and/or receive commands intended for the client (7, 8) via the radio network;
- the first transceiver (11) and the second transceiver (12) being implemented as software programs, defining an operation in software radio or SDR mode and are configured for exchanging messages so as to provide the requested quality of service and in particular a predetermined latency time; **characterized in that** said e system is configured for entering degraded SDR mode if the predetermined latency time is exceeded and to allow both field data buses (13, 14) and the respective clients thereof to be operated smoothly despite radio link interference in the following manner :
- a transmitter which sends a message to a receiver receives a first acknowledgment from the receiver, which allows the message sent to the transmitter to be erased;
- if the first acknowledgment is not received, the message is returned a certain number of times within a time limit set by the predetermined latency time;
- after said time limit, the sender enters degraded mode and/or continues to try to pass the message and sends a second acknowledgment to the working bus of which same is a client so that the other clients of the working bus can operate without disruption and in a transparent manner.

2. The system according to claim 1, **characterized in that** the N weapons systems are armored vehicle turrets (1) and the clients are sensors (7) and actuators (8).

3. The system according to claim 1, **characterized in that** the additional client is a second controller or computer (20) equipped with the second transceiver system (12) for removably connecting to at least one of the N weapons systems in a conventional configuration.

4. The system according to claim 1, **characterized in that** the first field bus (13), respectively the second field bus (14), is an industrial field bus such as CAN, MilCAN or Ethernet.

5. The system according to claim 1, **characterized in that** the field buses (13, 14) can be replaced by communication systems operating according to other architectures, such as e.g. a star [network] architecture.

6. The system according to claim 1, **characterized in that** the accessibility for the operator to the respective devices, controllers, sensors and actuator commands of the weapons system (1) is transparent and identical to a conventional configuration where the weapons system (1) is manned.

7. The system according to claim 1, **characterized in that** the system is configured for accepting commands sent with very low latency.

8. The system according to claim 1, **characterized in that** same is apt to manage multiple communications with the weapons systems.

9. The system according to claim 1, **characterized in that** same comprises means for searching for unmanned frequencies so as to avoid jamming and enemy radio links.

10. An operation of a weapons system (1) such as an armored vehicle turret, successively in one of the following two modes and vice versa:
- an unmanned remote operation mode using the security system for two-way radio communications between the control station and the remotely operated weapons system, according to any of the preceding claims;
- an ordinary or conventional mode of operation, in manned form, where the second controller or computer (20) equipped with a second transceiver system (12) has been disconnected from the weapons system (1).
